(19) Europäisches Patentamt / European Patent Office / Office européen des brevets

(11) **EP 3 909 911 A1**

(12) **EUROPEAN PATENT APPLICATION**

(43) Date of publication:
**17.11.2021 Bulletin 2021/46**

(51) Int Cl.:
**C01B 13/36** *(2006.01)*     **C01G 51/04** *(2006.01)*
**C01G 53/04** *(2006.01)*     **C01G 55/00** *(2006.01)*
**C01F 5/20** *(2006.01)*

(21) Application number: **20174869.6**

(22) Date of filing: **15.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Konstanz**
**78464 Konstanz (DE)**

(72) Inventors:
• **CÖLFEN, Helmut**
  **78465 Konstanz (DE)**
• **CHEN, Zongkun**
  **78465 Konstanz (DE)**

(74) Representative: **Müller-Boré & Partner**
**Patentanwälte PartG mbB**
**Friedenheimer Brücke 21**
**80639 München (DE)**

(54) **UNIVERSAL GREEN SYNTHESIS OF TWO-DIMENSIONAL NANOMATERIALS WITH GREAT PERFORMANCE FOR OXYGEN EVOLUTION REACTION**

(57)     The present invention relates to methods for preparing two-dimensional nanomaterials and to two-dimensional nanomaterials prepared by the methods.

**Description**

The present invention relates to methods for preparing two-dimensional nanomaterials and to two-dimensional nanomaterials prepared by the methods.

Two-dimensional nanomaterials are an important and widely investigated class of materials because of their unique electronic, optical, catalytic and mechanical properties partly resulting from their large number of surface atoms with unsaturated bonds. However, the performance-to-cost ratio of these nanomaterials is still far from satisfactory. Although a variety of methods has been developed to solve this problem, the existing synthesis methods vary from one compound to the other, prohibiting a universal synthesis strategy. Meanwhile, current synthesis comes with technical drawbacks such as high cost (special equipment, expensive reactants), tedious operation (posttreatment, multi-step operation), low product quality, eco-unfriendly conditions (non-green organic solvents) and the utilization of surfactants. On the other hand, attention should also be paid to enhance the performance of the end product to achieve a satisfactory performance-to-cost ratio.

The formation of two-dimensional morphology is a special growth habit, which is determined by relative growth rates of the different crystallographic facets and requires the differential growth: $R_{certain\ facet} \gg R_{other\ crystalline\ facets}$ ($R$ = the growth rate of a crystal facet). Over the past century, many quantitative models have been proposed to study the actual growth rates and control of the growth habit/final morphology, dating from the beginning of the last century known as Wulff rule. It is well known that the crystal structure partly dominates the growth habit, but the growth habit can be significantly influenced by the growth parameters, which helps to explain why the same material can form different morphologies under different growth conditions. Previous studies indicated that, except crystal structure, concentration and temperature are the most fundamental factors influencing the crystals' growth habit. Then, the key point consists in obtaining a preferential growth along two crystal axes spanning a two-dimensional area for growth realized via programming the growth conditions in terms of simple experimental parameters like temperature and reactant concentration on the basis of the anisotropic or isotropic structure of the target material.

Two-dimensional nanomaterials find a wide range of applications including catalysis. Catalysis is the process of increasing the chemical reaction rate by lowering the activation energy needed for the reaction to commence by the employment of a catalyst. This process usually occurs on the surface of the catalyst and the catalytic efficiency is highly dependent on the surface electronic structure of the catalyst. Two-dimensional nanomaterials are considered to be promising candidate materials for catalysts rather than the same materials in three-dimensional forms because low-coordinated atoms caused by ultrathin thickness could alter the electronic structure to affect the reaction process. Meanwhile, the high specific surface area of two-dimensional nanomaterials is beneficial for the increase in the number of exposed active sites. Up to now, two-dimensional nanomaterials have been evaluated as electrocatalysts for various reactions including oxygen reduction, oxygen evolution, hydrogen evolution, $CO_2$ reduction, and methanol oxidation.

Electrochemical water splitting is considered to be a sustainable method for producing clean energy from water in the form of hydrogen. In this electrochemical process, however, the oxygen evolution reaction (OER) is the rate-limiting step. There is thus a demand for electrocatalysts for the oxygen evolution reaction, which can be prepared in a facile, green and low-cost manner, while maintaining excellent performance.

The present invention addresses and overcomes the above-mentioned demands and disadvantages. Thus, the technical problem underlying the present invention is to provide a general, easy, green and low-cost method to obtain two-dimensional nanomaterials with excellent performance.

The solution to the above technical problem is achieved by the embodiments characterized in the claims.

In particular, the present invention provides a method for preparing a two-dimensional nanomaterial comprising the steps of:

(a) providing a precursor solution comprising at least one metal cation and at least one solvent; and
(b) bringing the precursor solution in contact with an atmosphere comprising a compound that forms hydroxide ions upon contact with the solvent,

wherein the method does not employ surfactants; and
wherein the two-dimensional nanomaterial has a thickness of 0.1 nm to 75 nm.

The present invention further provides a method for preparing a two-dimensional nanomaterial comprising the steps of:

(a) providing a precursor solution comprising at least one metal cation and at least one solvent;
(b) providing a reaction solution comprising at least one reactant selected from the group consisting of sodium sulfide, hydrochloric acid, an alkali source, and ammonia; and
(c) combining the precursor solution and the reaction solution,

wherein the method does not employ surfactants; and

wherein the two-dimensional nanomaterial has a thickness of 0.1 nm to 75 nm.

The present invention also provides a two-dimensional nanomaterial prepared by the methods according to the present invention, having a thickness of 0.1 nm to 75 nm.

A two-dimensional nanomaterial according to the present invention means a material that has in one spatial direction, i.e. the thickness direction, a height of 0.1 to 75 nm and is not particularly restricted in its dimensions in the other two spatial directions, except that these dimensions are by far larger than the thickness direction. According to the present invention, the thickness of the two-dimensional nanomaterial is determined by an atomic force microscope (AFM). Details thereof will be described herein-below.

The two-dimensional nanomaterial according to the present invention can have any two-dimensional morphology, including hexagonal morphology, circular morphology, strip morphology or sheet morphology.

The two-dimensional nanomaterial according to the present invention is preferably a crystalline material. This includes single crystalline and polycrystalline materials as well as agglomerates of crystalline two-dimensional materials. The two-dimensional nanomaterial is more preferably single crystalline.

The thickness of the two-dimensional nanomaterial is preferably 0.1 to 50 nm, more preferably 0.1 to 35 nm, further preferably 1 to 15 nm and particularly preferably 1 to 5 nm. In general, a smaller thickness is preferable because of the higher specific surface area of thinner two-dimensional nanomaterials and an increased number of surface atoms per unit mass associated therewith.

The two-dimensional nanomaterial according to the present invention is obtained by the methods according to the present invention and comprises one or more metal cations. Depending on the precursors and reactants used, the two-dimensional nanomaterial may be a metal oxide, metal hydroxide, a metal oxychloride, a metal oxide-hydroxide, a metal acid, a metal hydroxide sulfide or a metal sulfide.

The metal is preferably selected from alkaline metals, alkaline earth metals, transition metals, post-transition metals, metalloids and rare earth metals. More preferably, the metal is one or more selected from Mg, Al, Ca, Ti, Cr, Mn, Fe, Co, Ni, Cu, Zn, Ga, Y, Zr, Nb, Mo, Pd, Cd, Sn, Sb, W, Pt, Pb, Bi, La, Ce, Pr, Nd, Sm, Eu, Gd, Tb, Dy, Ho, Er, Tm, and Yb. Particularly preferably, the metal is one or more selected from Mg, Al, Ca, Cr, Mn, Fe, Co, Ni, Cu, Zn, Y, Cd, Sb, W, Pb, Ce, Eu, and Tb.

When the two-dimensional nanomaterial according to the present invention comprises more than one metal cation, the two-dimensional nanomaterial may be a mixed metal compound, where each of the metal cations has a distinct position in a crystal lattice, a solid solution or a doped metal compound, where one type of metal cation replaces another type of metal cation substitutionally and/or interstitially in its respective crystal lattice.

Specific examples of the two-dimensional nanomaterial of the present invention include $Mg(OH)_2$, $Ni(OH)_2$, $Ca(OH)_2$, $Al(OH)_3$, $Zn_5(OH)_8Cl_2 \cdot H_2O$, $Co_{1.176}(OH)_{2.004}Cl_{0.348}H_2O_{0.454}$, $Cd_4Cl_3(OH)_5$, $Cu_2(OH)_3(COOCH_3) \cdot H_2O$, $Eu(OH)_x(NO_3)_{3-x} \cdot nH_2O$, $Y(OH)_x(NO_3)_{3-x} \cdot nH_2O$, $Tb(OH)_xCl_{3-x} \cdot nH_2O$, $Co(S_xOH_y)$, $Mn_3O_4$, $\gamma\text{-}Fe_2O_3$, $CeO_2$, $Pb_3O_2(OH)_2$, $CuS$, $H_2WO_4$, Y-doped $\alpha\text{-}Co(OH)_2$, Co-doped $\alpha\text{-}Ni(OH)_2$, Y-doped $\alpha\text{-}Ni(OH)_2$, Fe-doped $Ni(OH)_2$, $Cr(OH)_3$, $Sb_2O_3$, $CrOCl$, $Cu_4SO_4(OH)_6$, $ZnO$, $\alpha\text{-}Co(OH)_2$, and $\beta\text{-}Co(OH)_2$.

The above two-dimensional nanomaterials find application in different fields, like sensor ($Mg(OH)2$), electrocatalysis ($Co_{1.176}(OH)_{2.004}Cl_{0.348}(H_2O)_{0.454}$, Y doped $\alpha\text{-}Co(OH)_2$, Co doped $\alpha\text{-}Ni(OH)_2$), supercapacitor ($Ni(OH)_2$, $Mn_3O_4$, $\gamma\text{-}Fe_2O_3$, $CuS$), catalysis ($CeO_2$, $CuS$), lithium-ion batteries ($Mn_3O_4$, $\gamma\text{-}Fe_2O_3$, $CuS$), quantum dot-sensitized solar cells ($Zn_5(OH)_8Cl_2 \cdot H_2O$), photoluminescence devices ($Eu(OH)_x(NO_3)_{3-x} \cdot nH_2O$, $Y(OH)_x(NO_3)_{3-x} \cdot nH_2O$, $Tb(OH)_xCl_{3-x} \cdot nH_2O$), paper conservation ($Mg(OH)_2$) and flame retardancy ($Sb_2O_3$).

In a specific embodiment, the two-dimensional nanomaterial is Fe-doped $Ni(OH)_2$ or $\alpha\text{-}Co(OH)_2$, as they represent excellent oxygen evolution reaction electrocatalysts.

The methods for preparing two-dimensional nanomaterials according to the present invention are co-precipitation methods. That means a solution of a metal cation is brought in contact with a counter-anion and the resulting compound precipitates due to reduced solubility in the solvent.

The methods according to the present invention do not employ surfactants. Surfactants are compounds that lower the surface tension or interfacial tension between two liquids, between a gas and a liquid, or between a liquid and a solid and generally comprise a hydrophobic part and a hydrophilic part in one molecule, such as detergents. According to the present invention, the term surfactant includes anionic surfactants, cationic surfactants, zwitterionic surfactants and non-ionic surfactants.

In conventional preparation methods where surfactants are used, impurities that remain on the surface of two-dimensional nanomaterials are often introduced. These impurities can block the surface and thereby reduce catalytic activity of two-dimensional nanomaterials.

In one embodiment, the present invention provides a method for preparing a two-dimensional nanomaterial comprising the steps of:

(a) providing a precursor solution comprising at least one metal cation and at least one solvent; and

(b) bringing the precursor solution in contact with an atmosphere comprising a compound that forms hydroxide ions upon contact with the solvent,

wherein the method does not employ surfactants; and

wherein the two-dimensional nanomaterial has a thickness of 0.1 nm to 75 nm.

The at least one metal cation may be selected from alkaline metal cations, alkaline earth metal cations, transition metal cations, post-transition metal cations, metalloid cations and rare earth metal cations.

Specific examples of the at least one metal cation include cations of Mg, Al, Ca, Ti, Cr, Mn, Fe, Co, Ni, Cu, Zn, Ga, Y, Zr, Nb, Mo, Pd, Cd, Sn, Sb, W, Pt, Pb, Bi, La, Ce, Pr, Nd, Sm, Eu, Gd, Tb, Dy, Ho, Er, Tm, and Yb. In a preferred embodiment, the at least one metal cation is selected from cations of Mg, Al, Ca, Cr, Mn, Fe, Co, Ni, Cu, Zn, Y, Cd, Sb, W, Pb, Ce, Eu, and Tb. In a further preferred embodiment, the at least one metal cation is selected from cations of Mg, Al, Cr, Mn, Fe, Co, Ni, Cu, Zn, Y, Cd, Sb, Ce, Eu, and Tb. In a specific embodiment, the at least one metal cation is one or more of $Ni^{2+}$, $Fe^{2+}$, and $Co^{2+}$.

The at least one metal cation may be added to the solvent to form the precursor solution in the form of a metal salt, such as metal halides, e.g. metal fluorides, metal chlorides, metal bromides and metal iodides, metal sulfates, metal nitrates, metal carbonates or metal acetates. Preferably, the at least one metal cation is provided in the form of a metal chloride, a metal sulfate, a metal nitrate or a metal acetate, or in the form of a salt of a metallic acid, such as tungstic acid.

The concentration of the metal cation in the precursor solution is preferably in the range of 0.1 mM to 500 mM, more preferably 1 mM to 200 mM.

The at least one solvent in the precursor solution is not particularly limited and may be a single solvent or a mixture of two or more solvents. Preferably, the at least one solvent is a green solvent that does not have a large environmental footprint. That is, the at least one solvent in the precursor solution is preferably free of halogenated, aromatic and polycyclic organic solvents.

More preferably, the at least one solvent is selected from water, aqueous acid solutions and alcohols. Further preferably, the solvent is one or more of water, ethanol, sulfuric acid and hydrochloric acid. When the solvent is an aqueous acid solution, such as sulfuric acid or hydrochloric acid, the concentration of the acid is preferably from 0.01 M to 1 M.

The precursor solution is brought in contact with an atmosphere comprising a compound that forms hydroxide ions upon contact with the solvent. Here, bringing in contact means that an interface between the precursor solution and the atmosphere is formed. This can, for example, be achieved by providing the precursor solution in an open container and placing this container in a second container, which contains the atmosphere comprising a compound that forms hydroxide ions upon contact with the solvent. This atmosphere may be created by introducing the compound to the second container in a gaseous state or by placing the compound in a liquid form, e.g. pure or as a solution, into the second container and evaporating the compound.

In a preferred embodiment, the atmosphere comprises methylamine, ethylamine, propylamine, ammonia, urea, or hexamethylenetetramine as the compound that forms hydroxide ions upon contact with the solvent. In a further preferred embodiment, the atmosphere comprises ammonia and hydroxide ions are formed by the diffusion of ammonia into the reaction solution. The ammonia is, for example, introduced into the atmosphere by decomposition of $NH_3 \cdot H_2O$ from an aqueous $NH_3$ solution.

The precursor solution is preferably brought into contact with the surrounding atmosphere at a temperature between 0°C and 50°C, preferably between 4°C and 25°C. By adjusting the temperature, the formation rate of the hydroxide ions in the precursor solution and the crystallisation rate of the two-dimensional nanomaterial can be controlled, such that the growth habitus of the crystals is two-dimensional.

In the method according to the present invention, the hydroxide ions formed in the precursor solution react with the ions dissolved in the precursor solution and preferably form a metal oxide, a metal hydroxide, a metal oxychloride, a metal hydroxide nitrate or a metal carbonate hydroxide, depending on the precursor used.

In a specific embodiment of the method according to the present invention, the precursor solution comprises $Co^{2+}$ or comprises a mixture of $Fe^{2+}$ and $Ni^{2+}$ in a molar ratio of 0:1 to 1:0 as the at least one metal cation. In a preferred embodiment, the molar ratio of $Fe^{2+}:Ni^{2+}$ is from 3:1 to 1:5.

The present invention further provides a method for preparing a two-dimensional nanomaterial comprising the steps of:

(a) providing a precursor solution comprising at least one metal cation and at least one solvent;
(b) providing a reaction solution comprising at least one reactant selected from the group consisting of sodium sulfide, hydrochloric acid, an alkali source, and ammonia; and
(c) combining the precursor solution and the reaction solution,

wherein the method does not employ surfactants; and

wherein the two-dimensional nanomaterial has a thickness of 0.1 nm to 75 nm.

The at least one metal cation may be selected from alkaline metal cations, alkaline earth metal cations, transition metal cations, post-transition metal cations, metalloid cations and rare earth metal cations.

Specific examples of the at least one metal cation include cations of Mg, Al, Ca, Ti, Cr, Mn, Fe, Co, Ni, Cu, Zn, Ga, Y, Zr, Nb, Mo, Pd, Cd, Sn, Sb, W, Pt, Pb, Bi, La, Ce, Pr, Nd, Sm, Eu, Gd, Tb, Dy, Ho, Er, Tm, and Yb. In a preferred embodiment, the at least one metal cation is selected from cations of Mg, Al, Ca, Cr, Mn, Fe, Co, Ni, Cu, Zn, Y, Cd, Sb, W, Pb, Ce, Eu, and Tb. In a further preferred embodiment, the at least one metal cation is selected from cations of Ca, Co, Cu, W, and Pb.

The at least one metal cation may be added to the solvent to form the precursor solution in the form of a metal salt, such as metal halides, e.g. metal fluorides, metal chlorides, metal bromides and metal iodides, metal sulfates, metal nitrates, metal carbonates or metal acetates, or in the form of a salt of a metallic acid, such as tungstic acid. Preferably, the at least one metal cation is provided in the form of a metal chloride, a metal sulfate, a metal nitrate or a metal acetate.

The concentration of the metal cation in the precursor solution is preferably in the range of 0.1 mM to 500 mM, more preferably 1 to 200 mM.

The reaction solution comprises the at least one reactant selected from the group consisting of sodium sulfide, the hydrochloric acid, the alkali source or the ammonia either in concentrated form or in form of a diluted aqueous solution. The diluted aqueous solution preferably has a concentration of 0.1 M to 1.5 M.

According to the present invention, the alkali source is preferably selected from the group consisting of metal hydroxides, such as alkaline metal hydroxides and alkaline earth metal hydroxides and metal carbonates, such as alkaline metal carbonates and alkaline earth metal carbonates. Further preferably, the alkali source is selected from the group consisting of KOH, LiOH, NaOH, $Ca(OH)_2$ and $Na_2CO_3$.

In the method according to the present invention, the reaction solution reacts with the ions dissolved in the precursor solution and preferably forms a metal oxide, metal hydroxide, a metal oxychloride, a metal oxide-hydroxide, a metal acid, a metal hydroxide sulfide or a metal sulfide.

The precursor solution is preferably combined with the reaction solution at a temperature between 0°C and 50°C, preferably between 4°C and 25°C. By adjusting the temperature, the crystallisation rate of the two-dimensional nanomaterial can be controlled, such that the growth habitus of the crystals is two-dimensional.

The precursor solution of the methods according to the present invention may further comprise an additive comprising at least one $NH_2$-group. With the addition of an additive comprising at least one $NH_2$-group to the precursor solution, the formation of ultrathin two-dimensional nanomaterials can be promoted. However, the addition of the additive has a promoting effect, such that two-dimensional nanomaterials having a thickness of 0.1 to 75 nm can also be obtained without addition of the additive. It is believed that the $NH_2$- groups can inhibit the growth in Z-direction by reversibly coordinating to surface atoms.

The additive comprising at least one $NH_2$-group is preferably formamide, ethanolamine, ethylenediamine, glycine or hydrazine, more preferably formamide.

In summary, the present invention provides a general, easy, green and low-cost method to obtain two-dimensional nanomaterials with excellent performance. The synthetic strategy in the present invention is realized by a one-step coprecipitation, involving a gas diffusion technique or by mixing of two solutions. The synthetic strategy in the present invention satisfies the requirements for green synthesis and combines the advantages of low-cost, simple operation and scalable production.

The Figures show:

Figure 1 shows SEM images, TEM images, SAED patterns and HRTEM images of two-dimensional nanomaterials. (A, F, K, P) Fe-doped $Co(OH)_2$, (B, G, L, Q) Y-doped $Co(OH)_2$, (C, H, M, R) Y-doped $\gamma$-$Fe_2O_3$, (D, I, N, S) Co-doped $Ni(OH)_2$, (E, J, O, T) Co and Y-doped $Ni(OH)_2$.

Figure 2 shows LSV curves (A), Tafel slopes (B) and turnover frequency (D) of $Ni(OH)_2$, $\gamma$-$Fe_2O_3$, $RuO_2$ and Fe1Ni3 electrocatalysts. (C) Comparison of the OER overpotential at 10 mA cm$^{-2}$ and Tafel slope of Fe1Ni3 electrocatalyst with reported congeneric catalysts.

Figure 3 shows (A) LSV curves and (B) Tafel slopes of $\alpha$-$Co(OH)_2$, $\beta$-$Co(OH)_2$, $RuO_2$ and bare CC. (C) The multi-current process of $\alpha$-$Co(OH)_2$ electrocatalyst for OER in 1 M KOH solution. The current density from 25 to 250 mA cm$^{-2}$ with an increment of 25 mA cm$^{-2}$ every 1000 s. (D) Long-term stability test of $\alpha$-$Co(OH)_2$ and commercial $RuO_2$ electrocatalyst.

The present invention will be further described with the following non-limiting examples.

*Measurement Methods:*

Scanning Electron Microscope (SEM) and Energy Dispersive Spectroscopy

The used SEM is a Zeiss CrossBeam 1540XB reaching a resolution of up to 1.1 nm at 20 kV and the acceleration voltage can be changed from 0.1 to 30 kV. It is equipped with an SE2 and an InLens detector. An accelerating voltage of 10-20 kV and 90 seconds acquisition time were used for elemental analysis.

Transmission Electron Microscope (TEM)

TEM images and selected area electron diffraction (SAED) were acquired on a Zeiss Libra 120 microscope operating at 120 kV. TEM samples were prepared from ethanol dispersion or water solution on conventional TEM grids (carbon-coated copper grids, 400 mesh, supplied by Quantifoil GmbH).

High Resolution Transmission Electron Microscope (HRTEM)

HRTEM images were obtained on a JEOL-2010 microscope operated at 200 kV. TEM samples were prepared from ethanol dispersion or water solution on conventional TEM grids (carbon-coated copper grids, 400 mesh, supplied by Quantifoil GmbH).

Atomic Force Microscope (AFM)

The thickness of the two-dimensional nanomaterials was characterized by a JPK NanoWizard atomic force microscope in the intermittent contact mode using a Silicon tip.

Electrochemical Measurements

All the electrochemical tests were performed on the CHI-760E electrochemical workstation. Electrocatalytic oxygen evolution reaction performance was measured in the three-electrode system in 1M KOH solution, in which Hg/HgO, carbon cloth and carbon rod were used as the reference, working and counter electrodes, respectively. The electrocatalyst suspension was prepared by dispersing 10 mg electrocatalysts and 2 mg carbon black (VC-72) into the solution of water, isopropanol and Nafion (v/v/v=4/1/0.1). The mixed suspension was ultrasonicated for 1 hour to form a homogeneous electrocatalysts ink. Then 100 $\mu$L catalyst ink was pipetted on the carbon cloth with the coating area of 1 $cm^2$ and dried with infrared light. All carbon cloth substrates need to be pre-treated in acetone, ethanol and water for 30 min prior to pasting. Linear sweep voltammetry curves were recorded in 1M KOH solution at 5 mV $s^{-1}$ with IR-100% compensation. For comparison, commercial $RuO_2$ electrocatalyst was measured under the same condition.

All the potentials were converted to reversible hydrogen electrode (RHE) by the Nernst equation:

$$E(RHE) = E(Hg/HgO) + 0.098 + 0.059 * pH \qquad (1)$$

Calculation of TOF: According to the equation that was previously reported in the literature, the value of TOF can be determined.

$$TOF = (j * A)/(4 * F * m) \qquad (2)$$

Where j is the current density obtained form LSV for OER at certain overpotential; A is the geometrical surface area of the electrode; F is the Faraday constant with the value of 96485 C $mol^{-1}$ and m is the amount of moles of active metal sites on the carbon cloth, assuming that all of the metal atoms in the catalyst were catalytically active.

Example 1: General synthesis strategy

(1) Synthesis by bringing a precursor solution in contact with an atmosphere comprising a compound that forms hydroxide ions upon contact with the solvent (Gas Diffusion Strategy)

A typical procedure is described as follows: X mM precursor solution was prepared by dissolving a certain amount of precursor into Y mL solvent in a vial. After ultrasonic dissolution, the vial was then sealed with parafilm and three pinholes were drilled, allowing for gas diffusion. Subsequently, the vial was put into a sealed blue cap bottle with Z mL concentrated ammonium hydroxide solution. After the diffusion for 12 hours at room temperature, the precipitate found at the bottom of the vial was washed by centrifugation (9000 rpm, 5 min) with Milli-Q water for two times and dried at room temperature.

(2) Synthesis by combining a precursor solution and a reaction solution (Mixing Two Solutions)

The precursor was dissolved in A mL solvent in a vial. After ultrasonic dissolution, B mL reaction solution was added into the vial and kept at room temperature for 12 hours. The precipitate found at the bottom of the vial was washed by centrifugation (9000 rpm, 5 min) with Milli-Q water for two times and dried at room temperature.
Two-dimensional nanomaterials have been prepared by the above described methods (1) and (2) using the reaction conditions summarized in Table 1:

Table 1

| Nanomaterials | Precursor | Solvent | Reaction Concentration | Gas Diffusion Strategy | Mixing Two Solutions | Reaction Temperature | Thickness |
|---|---|---|---|---|---|---|---|
| $Mg(OH)_2$ | $MgCl_2 \cdot 6H_2O$ | 40 mL water | 40 mM | 2 mL $NH_3 \cdot H_2O$ | | 25 °C | 70 nm |
| $Mg(OH)_2$ | $MgCl_2 \cdot 6H_2O$ | 40 mL water | 10/200 mM | 2 mL $NH_3 \cdot H_2O$ | | 25 °C | 70 nm |
| $Mg(OH)_2$ | $MgCl_2 \cdot 6H_2O$ | 40 mL water | 40 mM | 2 mL $NH_3 \cdot H_2O$ | | 4 °C | 70 nm |
| $Ni(OH)_2$ | $NiCl_2$ | 40 mL water | 20 mM | 2 mL $NH_3 \cdot H_2O$ | | 25 °C | 5 nm |
| $Ni(OH)_2$ | $NiCl_2$ | 40 mL water | 0.5/3 mM | 2 mL $NH_3 \cdot H_2O$ | | 25 °C | 5 nm |
| $Ni(OH)_2$ | $NiCl_2$ | 40 mL water | 20 mM | 2 mL $NH_3 \cdot H_2O$ | | 4 °C | 5 nm |
| $Ca(OH)_2$ | $CaCl_2$ | 40 mL absolute ethanol | 40 mM | | 2 mL $NH_3 \cdot H_2O$ | 25 °C | 3 nm |
| $Ca(OH)_2$ | $CaCl_2$ | 40 mL absolute ethanol | 10 mM | | 2 mL $NH_3 \cdot H_2O$ | 25 °C | 3 nm |
| $Al(OH)_3$ | $Al_2(SO_4)_3 \cdot 16H_2O$ | 40 mL_0.01 M sulfuric acid solution | 40 mM | 2 mL $NH_3 \cdot H_2O$ | | 25 °C | 5-10 nm |
| $Zn_5(OH)_8Cl_2 \cdot H_2O$ | $ZnCl_2$ | 40 mL water | 200 mM | 2 mL $NH_3 \cdot H_2O$ | | 25 °C | 14.5 nm |
| $Zn_5(OH)_8Cl_2 \cdot H_2O$ | $ZnCl_2$ | 40 mL water | 3/10/20/40 mM | 2 mL $NH_3 \cdot H_2O$ | | 25 °C | 14.5 nm |
| $Zn_5(OH)_8Cl_2 \cdot H_2O$ | $ZnCl_2$ | 40 mL water | 40 mM | 2 mL $NH_3 \cdot H_2O$ | | 4 °C | 14.5 nm |
| $Co_{1.176}(OH)_{2.004}Cl_{0.348}(H_2O)_{0.454}$ | $CoCl_2$ | 40 mL water | 20 mM | 2 mL $NH_3 \cdot H_2O$ | | 25 °C | 4 nm |

| Nanomaterials | Precursor | Solvent | Reaction Concentration | Gas Diffusion Strategy | Mixing Two Solutions | Reaction Temperature | Thickness |
|---|---|---|---|---|---|---|---|
| $Co_{1.176}(OH)_{2.004}Cl_{0.348}(H_2O)_{0.454}$ | $CoCl_2$ | 40 mL water | 3 mM | 2 mL $NH_3 \cdot H_2O$ | | 25 °C | 4 nm |
| $Cd_4Cl_3(OH)_5$ | $CdCl_2 \cdot xH_2O$ | 40 mL water | 20 mM | 2 mL $NH_3 \cdot H_2O$ | | 25 °C | 5 nm |
| $Cu_2(OH)_3(COOCH_3) \cdot H_2O$ | $Cu(CH_3COO)_2 \cdot H_2O$ | 40 mL water | 200 mM | 2 mL $NH_3 \cdot H_2O$ | | 25 °C | 45-60 nm |
| $Eu(OH)_x(NO_3)_{3-x} \cdot nH_2O$ | $Eu(NO_3)_3 \cdot 5H_2O$ | 40 mL water | 20 mM | 2 mL $NH_3 \cdot H_2O$ and 2 mL water | | 25 °C | 5 nm |
| $Eu(OH)_x(NO_3)_{3-x} \cdot nH_2O$ | $Eu(NO_3)_3 \cdot 5H_2O$ | 40 mL water | 3 mM | 2 mL $NH_3 \cdot H_2O$ and 2 mL water | | 25 °C | 5 nm |
| $Y(OH)_x(NO_3)_{3-x} \cdot nH_2O$ | $Y(NO_3)_3 \cdot 6H_2O$ | 40 mL water | 20 mM | 2 mL $NH_3 \cdot H_2O$ and 2 mL water | | 25 °C | 5 nm |
| $Y(OH)_x(NO_3)_{3-x} \cdot nH_2O$ | $Y(NO_3)_3 \cdot 6H_2O$ | 40 mL water | 5/100 mM | 2 mL $NH_3 \cdot H_2O$ and 2 mL water | | 25 °C | 5 nm |
| $Y(OH)_x(NO_3)_{3-x} \cdot nH_2O$ | $Y(NO_3)_3 \cdot 6H_2O$ | 40 mL water | 20 mM | 2 mL $NH_3 \cdot H_2O$ and 2 mL water | | 4 °C | 5 nm |
| $Tb(OH)_xCl_{3-x} \cdot nH_2O$ | $TbCl_3 \cdot 6H_2O$ | 40 mL water | 20 mM | 2 mL $NH_3 \cdot H_2O$ and 2 mL water | | 25 °C | 4 nm |
| $Co(S_xOH_y)$ | $CoCl_2$ | 20 mL water | 20 mM | | 1 mL $Na_2S \cdot xH_2O$ (0.1 M) aqueous solution | 25 °C | 4-5 nm |
| $Mn_3O_4$ | $MnCl_2 \cdot 4H_2O$ | 40 mL water | 200 mM | 2 mL $NH_3 \cdot H_2O$ | | 25 °C | 11 nm |

EP 3 909 911 A1

(continued)

| Nanomaterials | Precursor | Solvent | Reaction Concentration | Gas Diffusion Strategy | Mixing Two Solutions | Reaction Temperature | Thickness |
|---|---|---|---|---|---|---|---|
| $\gamma$-Fe$_2$O$_3$ | FeCl$_2$·4H$_2$O | 40 mL water | 200 mM | 2 mL NH$_3$·H$_2$O | | 25 °C | 4 nm |
| $\gamma$-Fe$_2$O$_3$ | FeCl$_2$·4H$_2$O | 40 mL water | 10/20/30 mM | 2 mL NH$_3$·H$_2$O | | 25 °C | 30 nm |
| CeO$_2$ | Ce(NO$_3$)$_3$·6H$_2$O | 40 mL water | 30 mM | 2 mL NH$_3$·H$_2$O | | 25 °C | 4-5 nm |
| Pb$_3$O$_2$(OH)$_2$ | Pb(CH$_3$COO)$_2$·3H$_2$O | 40 mL water | 20 mM | | 1 mL NH$_3$·H$_2$O | 25 °C | 2-3 nm |
| Pb$_3$O$_2$(OH)$_2$ | Pb(CH$_3$COO)$_2$·3H$_2$O | 40 mL water | 3 mM | | 1 mL NH$_3$·H$_2$O | 25 °C | 2-3 nm |
| CuS | CuCl$_2$·2H$_2$O | 20 mL water | 20 mM | | 1 mL Na$_2$S·xH$_2$O (1 M) aqueous solution | 25 °C | 6-8 nm |
| CuS | CuCl$_2$·2H$_2$O | 20 mL water | 20 mM | | 1 mL Na$_2$S·xH$_2$O (1 M) aqueous solution | 4 °C | 6-8 nm |
| H$_2$WO$_4$ | Na$_2$WO$_4$·2H$_2$O | 10 mL water | 0.1 g | | 0.5 mL concentrated hydrochloric acid solution | 25 °C | 28-34 nm |
| H$_2$WO$_4$ | Na$_2$WO$_4$·2H$_2$O | 10 mL water | 0.1 g | | 0.5 mL concentrated hydrochloric acid solution | 4 °C | 28-34 nm |
| Y doped $\alpha$-Co(OH)$_2$ | Y(NO$_3$)$_3$·6H$_2$O and CoCl$_2$ | 40 mL water | 5 mM and 15 mM | 2 mL NH$_3$·H$_2$O | | 25 °C | 4-7.5 nm |
| Co doped $\alpha$-Ni(OH)$_2$ | NiCl$_2$ and CoCl$_2$ | 40 mL water | 10 mM and 10 mM | 2 mL NH$_3$·H$_2$O | | 25 °C | 4 nm |
| Sb$_2$O$_3$ | SbCl$_3$ | 40 mL absolute ethanol | 40 mM | 2 mL NH$_3$·H$_2$O | | 25 °C | 20-5 nm |
| CrOCl | CrCl$_3$·6H$_2$O | 40 mL absolute ethanol | 20 mM | 2 mL NH$_3$·H$_2$O | | 25 °C | 10-50 nm |
| Co and Y doped $\alpha$-Ni(OH)$_z$ | NiCl$_2$, Y(NO$_3$)$_3$·6H$_2$O and CoCl$_2$ | 40 mL water | 10 mM, 5 mM and 10 mM | 2 mL NH$_3$·H$_2$O | | 25 °C | 5-20 nm |

| Nanomaterials | Precursor | Solvent | Reaction Concentration | Gas Diffusion Strategy | Mixing Two Solutions | Reaction Temperature | Thickness |
|---|---|---|---|---|---|---|---|
| $Cu_4SO_4(OH)_6$ | $CuSO_4 \cdot 5H_2O$ | 40 mL water | 200 mM | 2 mL $NH_3 \cdot H_2O$ | | 25 °C | 5-9 nm |
| ZnO | $Zn(CH_3COO)_2$ | 40 mL water | 40 mM | 2 mL $NH_3 \cdot H_2O$ | | 25 °C | 4-6 nm |
| $Co(OH)_2$ | $Co(CH_3COO)_2 \cdot 4H_2O$ | 40 mL water | 20 mM | 2 mL $NH_3 \cdot H_2O$ | | 25 °C | 2.5-3.5 nm |

Two-dimensional nanomaterials have been obtained from the above syntheses. The two dimensional nano-materials of $Mg(OH)_2$, $Ni(OH)_2$, $Ca(OH)_2$, $Zn_5(OH)_8Cl_2 \cdot H_2O$, $Co_{1.176}(OH)_{2.004}Cl_{0.348}(H_2O)_{0.454}$, $Cd_4Cl_3(OH)_5$, $Eu(OH)_x(NO_3)_{3-x} \cdot nH_2O$, $Y(OH)_x(NO_3)_{3-x} \cdot nH_2O$, $Tb(OH)_xCl_{3-x} \cdot nH_2O$, $Co(SxOHy)$, $Mn_3O_4$, $\gamma$-$Fe_2O_3$, $Pb_3O_2(OH)_2$, $CuS$, Y doped $\alpha$-$Co(OH)_2$, Co doped $\alpha$-$Ni(OH)_2$, Y and Co doped $\alpha$-$Ni(OH)_2$) exhibit defined shapes, such as hexagonal or circular morphologies. The two-dimensional nanomaterials of $Cu_4SO_4(OH)_6$, $ZnO$, $CeO_2$ and $H_2WO_4$ show strip morphologies, while $Al(OH)_3$, $Sb_2O_3$ and $CrOCl$ display the typical morphology of aggregated nanosheets.

Moreover, the thicknesses of the two-dimensional nanomaterials were determined by atomic force microscopy (AFM). Most of the two-dimensional nanomaterials show ultrathin two-dimensional structures with thickness equal to or less than 5 nm, while $Mg(OH)_2$, $Cu_2(OH)_3(COOCH_3) \cdot H_2O$, $Mn_3O_4$ and $H_2WO_4$ were obtained as an aggregate of many thin layers, having a combined average thickness of 70 nm, 60 nm, 11 nm and 30 nm respectively.

Example 2: Synthesis of transition metal-doped oxides and hydroxides

A typical procedure is described as follows: An aqueous solution containing the precursor was prepared by dissolving the metal salts in deionized water (40 mL). After ultrasonic dissolution, the vial was then sealed with parafilm and three pinholes were drilled allowing for gas diffusion. Then the vial was put into a sealed blue cap bottle with 2 mL concentrated ammonium hydroxide solution. After the diffusion for 12 hours at room temperature, the precipitate found at the bottom of the vial was washed by centrifugation (9000 rpm, 5 min) with Milli-Q water for two times and dried at room temperature.

The transition metal-doped oxides and hydroxides have been prepared by the above described method using the reaction conditions summarized in Table 2

Table 2:

| Nanomaterials | Precursor (Concentration) | Solvent | Gas Diffusion Strategy | Reaction Temperature |
|---|---|---|---|---|
| Fe doped $Co(OH)2$ | $CoCl_2$ (10 mM) and $FeCl_2 \cdot 4H_2O$ (10 mM) | 40 mL water | 2 mL $NH_3 \cdot H_2O$ | 25 °C |
| Y doped $Co(OH)_2$ | $CoCl_2$ (15 mM) and $Y(NO_3)_3 \cdot 6H_2O$ (5 mM) | 40 mL water | 2 mL $NH_3 \cdot H_2O$ | 25 °C |
| Y doped $\gamma$-$Fe_2O_3$ | $FeCl_2 \cdot 4H_2O$ (15 mM) and $Y(NO_3)_3 \cdot 6H_2O$ (5 mM) | 40 mL water | 2 mL $NH_3 \cdot H_2O$ | 25 °C |
| Fe doped $Ni(OH)_2$ | $FeCl_2 \cdot 4H_2O$ (5 mM) and $NiCl_2$ (15 mM) | 40 mL water | 2 mL $NH_3 \cdot H_2O$ | 25 °C |
| Co doped $Ni(OH)_2$ | $CoCl_2$ (10 mM) and $NiCl_2$ (10 mM) | 40 mL water | 2 mL $NH_3 \cdot H_2O$ | 25 °C |
| Co and Y doped Ni $(OH)2$ | $CoCl_2$ (10 mM), $NiCl_2$ (10 mM) and $Y(NO_3)_3 \cdot 6H_2O$ (5 mM) | 40 mL water | 2 mL $NH_3 \cdot H_2O$ | 25 °C |
| Mixture of $Co(OH)_2$ and $CeO_2$ | $CoCl_2$ (15 mM) and $Ce(NO_3)_3 \cdot 6H_2O$ (5 mM) | 40 mL water | 2 mL $NH_3 \cdot H_2O$ | 25 °C |

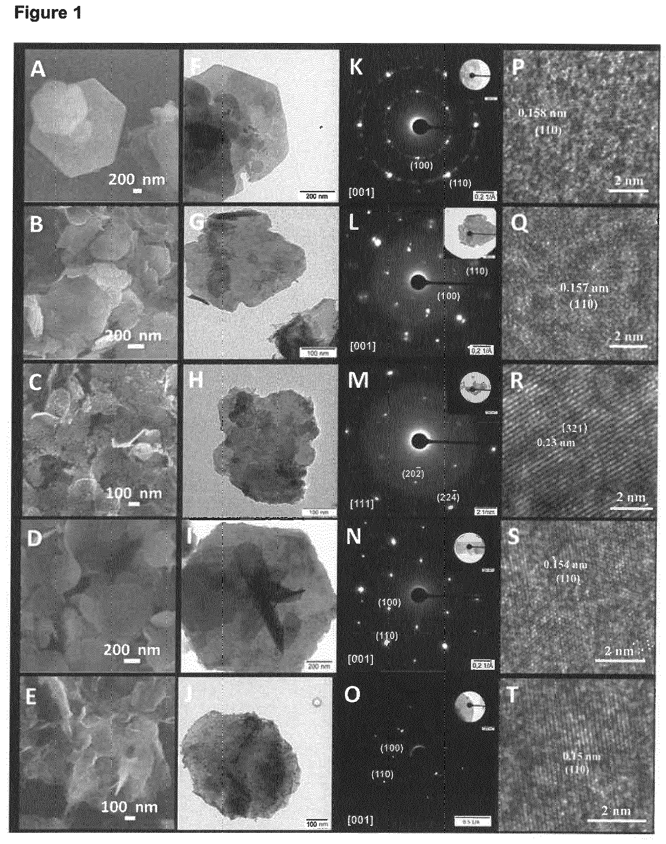

As shown in Figure 1, SEM and TEM images demonstrate the typical two-dimensional morphologies of the as-synthesized products, while AFM results show their ultrathin characteristic (less than 5 nm).

Figure 1 shows SEM images, TEM images, SAED patterns and HRTEM images of two-dimensional nanomaterials. (A, F, K, P) Fe-doped $Co(OH)_2$, (B, G, L, Q) Y-doped $Co(OH)_2$, (C, H, M, R) Y-doped $\gamma$-$Fe_2O_3$, (D, I, N, S) Co-doped $Ni(OH)2$, (E, J, O, T) Co and Y-doped $Ni(OH)_2$.

Therefore, these results prove the feasibility and the universality of the method for preparing a two-dimensional nanomaterial according to the present invention.

Example 3: Fe-doped $Ni(OH)_2$ and $\alpha$-$Co(OH)_2$ as oxygen evolution reaction catalysts

The performance of Fe-doped $Ni(OH)_2$ prepared in Example 2 with a molar Fe:Ni precursor ratio of 1:3 (Fe1Ni3) and of $\alpha$-$Co(OH)_2$ prepared in Example 1 as oxygen evolution reaction catalysts has been investigated.

Fe1Ni3:

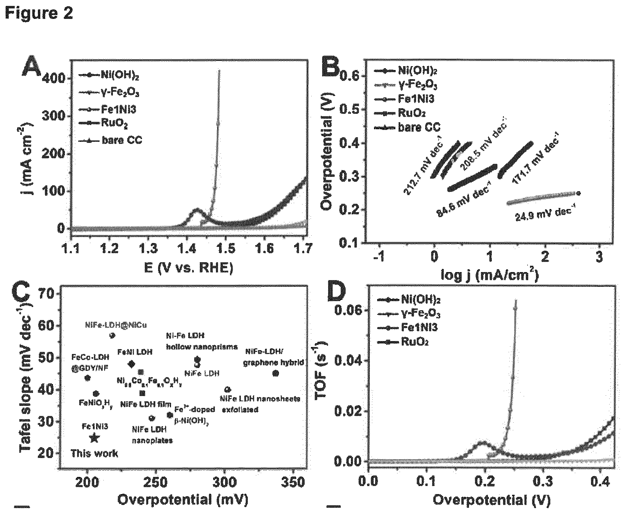

Linear sweep voltammetry (LSV) curves were first recorded at a scan rate of 5 mV·s$^{-1}$ in 1M KOH solution using a standard three-electrode system to investigate the OER activity. As seen in Fig. 2A, two-dimensional Fe doped nickel hydroxide with Fe/Ni feeding ratio=1/3 (Fe1Ni3) affords the best electrocatalytic OER activity from the perspective of overpotential, because 203 mV at the current density of 10 mA cm$^{-2}$ is lower than $\gamma$-Fe$_2$O$_3$, Ni(OH)$_2$ and commercial RuO$_2$. Besides, Fe1Ni3's Tafel slope (in Fig. 2B) is determined to be 24.9 mV dec$^{-1}$, which is much lower than the results of $\gamma$-Fe$_2$O$_3$ (208.5 mV dec$^{-1}$), Ni(OH)$_2$ (171.7 mV dec$^{-1}$), commercial RuO$_2$ (84.6 mV dec$^{-1}$) and carbon cloth (212.7 mV dec$^{-1}$), signifying that the Fe1Ni3 electrocatalyst has the best catalytic activity. It should be noted that the remarkable OER performance of the Fe1Ni3 electrocatalyst is better than not just reference samples of this work, but other reported congeneric materials such as Ni$_{0.8}$Co$_{0.1}$Fe$_{0.1}$OXHY (239 mV, 45.4 mV dec$^{-1}$), FeCo-LDH@GDY/NF (200 mV, 43.6 mV dec$^{-1}$), NiFe-LDH@NiCu (218 mV, 56.9 mV dec$^{-1}$) and Ni-Fe LDH hollow nanoprisms (280 mV, 49.4 mV dec$^{-1}$) (Fig.2C), highlighting the positive features of the fabrication strategy of the present invention.

Figure 2 shows LSV curves (A), Tafel slopes (B) and turnover frequency (D) of Ni(OH)$_2$, $\gamma$-Fe$_2$O$_3$, RuO$_2$ and Fe1Ni3 electrocatalysts. (C) Comparison of the OER overpotential at 10 mA cm$^{-2}$ and Tafel slope of Fe1Ni3 electrocatalyst with reported congeneric catalysts.

$\alpha$-Co(OH)$_2$:

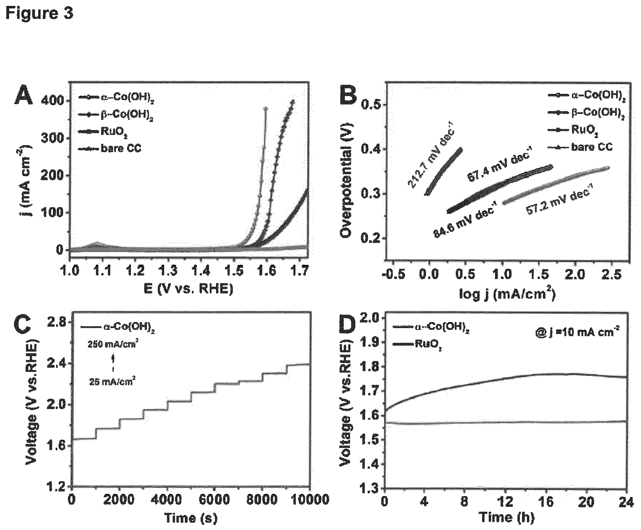

The electrocatalytic reaction for oxygen evolution was performed to demonstrate the preponderance of the present invention in producing high-performance products with the facile and low-cost synthesis. Linear sweep voltammetry (LSV) curves of $\alpha$-Co(OH)$_2$, $\beta$-Co(OH)$_2$, RuO$_2$ and bare carbon cloth (CC) were tested at a scan rate of 5 mV s$^{-1}$ in 1M KOH solution using a standard three-electrode system to evaluate the OER activity. As shown in Fig.3A $\alpha$-Co(OH)$_2$ has a catalytic activity with the demand of overpotential of 277 mV at 10 mA cm$^{-2}$, while $\beta$-Co(OH)$_2$, RuO$_2$ and bare CC show weak or no OER activity. Besides, the excellent catalytic property of $\alpha$-Co(OH)$_2$ is further verified by its low Tafel slope (Fig.3B), implying more favorable catalytic kinetics. The Tafel slope of $\alpha$-Co(OH)$_2$ is 57.2 mVdec$^{-1}$, which is much smaller than that of $\beta$-Co(OH)$_2$ (67.4mV dec$^{-1}$), RuO$_2$ (84.6 mV dec$^{-1}$) and bare CC (212.7 mVdec$^{-1}$). Fig. 3C shows the multi-current process for $\alpha$-Co(OH)$_2$ with the current increasing from 25 to 250 mA cm$^{-2}$ (25 mA cm$^{-2}$ per 1000 s), and the potential for every step (different current densities) is unchanged, suggesting excellent mass transportation, conductivity, and mechanical robustness. Except for the parameters mentioned above, superior long-term stability is also a key concern for OER electrocatalysts. Therefore, the chronopotentiometric curves for $\alpha$-Co(OH)$_2$ and RuO$_2$ were recorded at 10 mA cm$^{-2}$ to compare their long-term stability (Fig. 3D). Obviously, after 24 hours, the potential of $\alpha$-Co(OH)$_2$ remains nearly constant, while commercial RuO$_2$ shows a voltage change, signifying the more reliable durability of $\alpha$-Co(OH)$_2$ compared to commercial RuO$_2$ catalysts.

**Claims**

1. A method for preparing a two-dimensional nanomaterial comprising the steps of:

   (a) providing a precursor solution comprising at least one metal cation and at least one solvent; and
   (b) bringing the precursor solution in contact with an atmosphere comprising a compound that forms hydroxide ions upon contact with the solvent,

   wherein the method does not employ surfactants; and
   wherein the two-dimensional nanomaterial has a thickness of 0.1 nm to 75 nm.

2. The method according to claim 1, wherein the at least one metal cation is selected from alkaline metal cations, alkaline earth metal cations, transition metal cations, post-transition metal cations, metalloid cations and rare earth metal cations.

3. The method according to any one of claim 1 or 2, wherein the at least one metal cation is selected from cations of Mg, Al, Ca, Ti, Cr, Mn, Fe, Co, Ni, Cu, Zn, Ga, Y, Zr, Nb, Mo, Pd, Cd, Sn, Sb, W, Pt, Pb, Bi, La, Ce, Pr, Nd, Sm, Eu, Gd, Tb, Dy, Ho, Er, Tm, and Yb.

4. The method according to any one of claims 1 to 3, wherein the two-dimensional nanomaterial is a metal oxide, a metal hydroxide, a metal oxychloride, a metal hydroxide nitrate or a metal carbonate hydroxide.

5. The method according to any one of claims 1 to 4, wherein the at least one metal cation in the precursor solution is a mixture of $Fe^{2+}$ and $Ni^{2+}$ in a molar ratio of 0:1 to 1:0 or wherein the metal cation in the precursor solution is $Co^{2+}$.

6. The method according to any one of claims 1 to 5, wherein the atmosphere comprises methylamine, ethylamine, propylamine, ammonia, urea, or hexamethylenetetramine .

7. A method for preparing a two-dimensional nanomaterial comprising the steps of:

   (a) providing a precursor solution comprising at least one metal cation and at least one solvent;
   (b) providing a reaction solution comprising at least one reactant selected from the group consisting of sodium sulfide, hydrochloric acid, an alkali source, and ammonia; and
   (c) combining the precursor solution and the reaction solution,

   wherein the method does not employ surfactants; and
   wherein the two-dimensional nanomaterial has a thickness of 0.1 nm to 75 nm.

8. The method according to claim 7, wherein the at least one metal cation is selected from alkaline metal cations, alkaline earth metal cations, transition metal cations, post-transition metal cations, metalloid cations, and rare earth metal cations.

9. The method according to any one of claim 7 or 8, wherein the at least one metal cation is selected from cations of Mg, Al, Ca, Ti, Cr, Mn, Fe, Co, Ni, Cu, Zn, Ga, Y, Zr, Nb, Mo, Pd, Cd, Sn, Sb, W, Pt, Pb, Bi, La, Ce, Pr, Nd, Sm, Eu, Gd, Tb, Dy, Ho, Er, Tm, and Yb.

10. The method according to any one of claims 7 to 9, wherein the two-dimensional nanomaterial is a metal oxide, metal hydroxide, a metal oxychloride, a metal oxide-hydroxide, a metal acid, a metal hydroxide sulfide or a metal sulfide.

11. The method according to any one of claims 1 to 10, wherein the solvent is one or more of water, ethanol, sulfuric acid, and hydrochloric acid.

12. The method according to any one of claims 1 to 11 wherein the precursor solution further comprises an additive comprising at least one $NH_2$-group.

13. The method according to any one of claims 1 to 12, wherein the concentration of the metal cation in the precursor solution is in the range of 0.1 mM to 500 mM and/or wherein the reaction temperature is between 0°C and 50°C.

14. A two-dimensional nanomaterial prepared by the method according to any one of claims 1 to 13, having a thickness of 0.1 nm to 75 nm.

15. The two-dimensional nanomaterial according to claim 14, wherein the two-dimensional nanomaterial is $Fe_xNi_y(OH)_2$ with x/y being 0:1 to 1:0 and x+y being 1, or wherein the two-dimensional nanomaterial is $\alpha$-$Co(OH)_2$.

**Figure 1**

EP 3 909 911 A1

Figure 2

16

Figure 3

Europäisches
Patentamt

European
Patent Office

Office européen
des brevets

## EUROPEAN SEARCH REPORT

**Application Number**

EP 20 17 4869

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 298 600 A (UNIV XIAMEN) 20 July 2018 (2018-07-20) | 14,15 | INV. C01B13/36 |
| A | * claims 1-4 * * examples 2,5 * * machine translation * | 1-13 | C01G51/04 C01G53/04 C01G55/00 C01F5/20 |
| X | CN 109 231 172 A (UNIV FUDAN) 18 January 2019 (2019-01-18) | 14 | |
| A | * claim 1 * * machine translation * | 1-13 | |
| X | CN 108 144 616 A (UNIV TAIYUAN TECHNOLOGY) 12 June 2018 (2018-06-12) | 7-14 | |
| A | * claim 1 * * machine translation * | 1-6 | |
| A | WU J ET AL: "Magnesium hydroxide nanoparticles synthesized in water-in-oil microemulsions", JOURNAL OF COLLOID AND INTERFACE SCIENCE, ACADEMIC PRESS,INC, US, vol. 324, no. 1-2, 1 August 2008 (2008-08-01), pages 167-171, XP022734338, ISSN: 0021-9797, DOI: 10.1016/J.JCIS.2008.03.052 [retrieved on 2008-06-03] * the whole document * | 1-6 | |

**TECHNICAL FIELDS SEARCHED (IPC)**

C01B
C01G
C01F

The present search report has been drawn up for all claims

| Place of search | Date of completion of the search | Examiner |
|---|---|---|
| The Hague | 2 November 2020 | Gerwann, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 17 4869

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2020

| Patent document cited in search report | | Publication date | Patent family member(s) | Publication date |
|---|---|---|---|---|
| CN 108298600 | A | 20-07-2018 | NONE | |
| CN 109231172 | A | 18-01-2019 | NONE | |
| CN 108144616 | A | 12-06-2018 | NONE | |

EPO FORM P0459

For more details about this annex : see Official Journal of the European Patent Office, No. 12/82